# EUROPEAN PATENT SPECIFICATION

(11) **EP 2 425 607 B1**
(45) Date of publication and mention of the grant of the patent: **03.04.2013**
(21) Application number: 10721007.2
(22) Date of filing: 27.04.2010
(51) Int. Cl.: H04L 29/08, H04W 4/14

(54) **METHOD FOR PROVIDING PROOF OF RECEIPT IN A MOBILE TELECOMMUNICATION NETWORK.**
VERFAHREN ZUR BEREITSTELLUNG EINER EMPFANGSQUITTUNG IN EINEM MOBILTELEKOMMUNIKATIONSNETZ
PROCÉDÉ DE FOURNITURE D'UNE PREUVE DE RÉCEPTION DANS UN RÉSEAU DE TÉLÉCOMMUNICATIONS MOBILES

(30) Priority: 30.04.2009 SE 0950290
(43) Date of publication of application: 07.03.2012
(73) Proprietor: Giesecke & Devrient GmbH, 81677 München (DE)
(72) Inventor: ERIKSSON, Alf, S-183 30 Täby (SE); FREESE, Esko, S-126 50 Hägersten (SE)
(86) International application number: PCT/EP2010/055615
(87) International publication number: WO 2010/125056

(56) References cited:
- WO-A1-02/30084
- WO-A1-2004/014090
- US-A1- 2008 139 180
- US-B1- 6 834 196
- "3rd Generation Partnership Project; Technical Specification Group Core Network; Unstructured Supplementary Service Data (USSD); Stage 2 (Release 8)" 3GPP STANDARD; 3GPP TS 23.090, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2008 (2008-12-01), pages 1-32, XP050362563

## Description

The present invention refers to a method for providing a cost-efficient Proof of Receipt (PoR) in a mobile telecommunication network. Such Proof of Receipt (PoR) can be issued upon successful Over-The-Air (OTA) provisioning of a PLMN (Public Land Mobile Network) mobile device or SIM (Subscriber Identity Module), or implementing a delivery- or read receipt of an User Short Message (SMS).

The present invention concerns a method for following-up mobile operator services using over-the-air management of data and applications on mobile subscriber's devices or SIM respectively USIM (Universal Mobile Telephony System) SIM cards, in a Home Network (HPLMN) or in a Visited Network.

Mobile Equipment (ME), i.e. mobile telephones, using the Global System for Mobile communication (GSM) and 3^{rd} Generation Partnership program (3GPP) as standards for digital wireless communication are called GSM-3G phones, below called mobile devices. Additional services nowadays allow a great flexibility in where and when mobile devices are used. One of the greatest service of GSM and 3GPP networks is the seamless roaming into networks other than the Home Network (HPLMN). The present invention also refers to other mobile communication standards such as LTE (3^{rd} Generation Partnership Long Term Evolution).

Traditional GSM roaming is defined in GSM Association Permanent Reference Document AA.39 as the ability for a mobile subscriber to automatically make and receive voice calls, send and receive data, or to have access to other services when travelling outside the geographical coverage area of the HPLMN, by means of using a visited network (VPLMN), with the very same mobile telephone and subscriber procedures used when attaching the HPLMN.

US2008/0139180 discloses a method of receiving a request with a SMS message at an UE to initiate an USSD session toward an external USSD application.

Traditional and simplest OTA updates of the mobile device or SIM or USIM take place by using a standards-based Short Message as the bearer technology, to send OTA-information or update over a mobile network to the device or SIM. The use of Short Message Service (SMS) for carrying such data essentially works well, especially from a costs-point of view as the Mobile Terminating Short Messages are not typically accounted between the roaming partners, or charges from the subscribers.

Many OTA updates would require an acknowledgement from the device or from the SIM-card. Standards-based acknowledgement PoR (Proof-of-Receipt) concept has been specified by ETSI/3GPP for GSM 03.48 Remote File Management, to send a dedicated PoR from SIM towards the SIM-OTA platform, using a new Short Message in opposite direction, as bearer for the PoR. This PoR can be also be encrypted as per the specification 03.48, to ensure security.

The issue with using a standards-based Short Message as bearer for PoR is its generated costs, especially in international roaming scenarios when the cost of originating a Short Message abroad might be substantially high, and hence it is preventing use of PoR for OTA updates. This implies that successfulness of OTA provisioning made cannot be secured, on end-to-end level and e.g. faults in the OTA-chain cannot be identified and traced.

The present invention solves this problem

The present invention refers to a method in mobile telecommunication networks deploying Over-The-Air (OTA) provisioning of a SIM or an USIM or a Mobile Equipment (ME), in need to receive a trusted acknowledgement or Proof-of Receipt from the ME or SIM upon an OTA provisioning which is made over the existing signalling interfaces, and is characterised in, that the SIM or USIM or ME is generating a standards based USSD-command (Unstructured Supplementary Services Data) as a result of successful or unsuccessful OTA provisioning, in that the serving mobile network will be caused to route the MAP (Mobile Application Part)-USSD message over an existing, configured SS7 domain to the home network (HPLMN) and USSD Gateway entity which is caused to relay the acknowledgement to the OTA platform.

The present invention thus relates to a method where an encrypted or non-encrypted Proof-of-Receipt can be conveyed from the mobile device in a low-cost manner, back towards the Home PLMN and eventually the OTA platform that made the OTA provisioning using Short Message as bearer for the OTA. The invention uses the same SS7 SCCP signalling domain with its connectivity and routing services and standards-based MAP (Mobile Application Part) messages - all being already implemented and in place for the 3G/GSM subscribers mobility, roaming and Short Message Service.

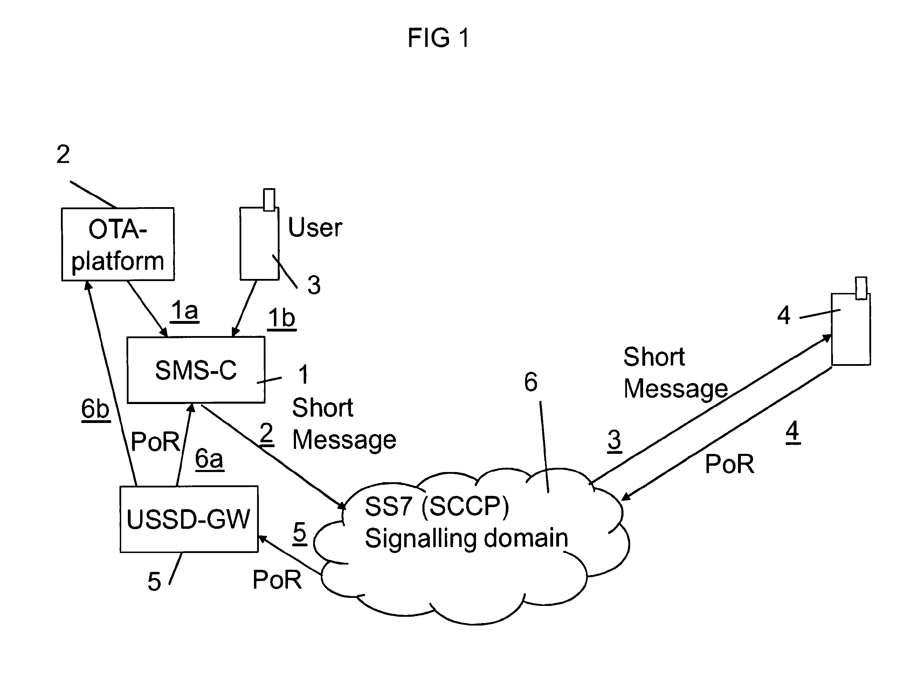

The present invention will be described in more detail below together with exemplifying embodiments of the invention and the attached drawings, where
- Figure 1 illustrates the present invention.

Figure 1 illustrates a method in a mobile telecommunication networks deploying Over-The-Air (OTA) provisioning of SIM or USIM or mobile Equipment (ME), in need to receive a trusted acknowledgement or Proof-of Receipt (PoR) from the ME or SIM upon an OTA provisioning which is made over the existing signalling interfaces.

The PoR can for example be an acknowledgement of a successful roaming that has been carried out. It could also be a question of get a PoR after having sent a measurement value or some other information or data.

According to the present invention the SIM or USIM or ME is generating a standards based USSD-command (Unstructured supplementary Services Data) as a result of successful or unsuccessful OTA provisioning. The serving mobile network will be caused to route the MAP (Mobile Application Part)-USSD message over an existing, configured SS7 domain to the home network (HPLMN) and USSD Gateway entity which is caused to relay the acknowledgement to the OTA platform.

In Figure 1 reference numeral 1 designates a SMS-C (Short message Service centre), numeral 2 designates an OTA platform, 3 designates a users mobile device, 4 designates another users mobile device or a stationary mounted device capable of communicating over the mobile telecommunication network, 5 designates a trusted USSD-GateWay and reference numeral 6 designates a SS7 Signalling domain.

According to a preferred embodiment of the invention the USSD-acknowledgement is caused to be sent back by the ME, upon successful reception, or upon selection and successful read of an ordinary message to the mobile subscriber or user. According to another preferred embodiment of the invention the sending conditions for sending or not sending said acknowledgement is pre-configured in the ME or SIM or USIM.

Alternatively it is preferred that the sending conditions for sending or not sending said acknowledgement is caused to come as a part of the actual message content on the OTA-protocol level, or as part message on the bearer message protocol level.

According to still another preferred embodiment the message from an OTA-Platform or a users ME for provisioning of a SIM or an USIM or a Mobile Equipment (ME)is a Short Message (SM).

In Figure 1 the present invention is exemplified step by step.

The reference numerals designating arrows are underlined and refers to the order according to which the present method works.

The first step is that an OTA-Platform or a subscriber with a mobile device sends 1a a data message respectively 1b a message to a recipient via a SMS-C 1. The second step is that the SMS-C transfers a Short Message (SM) 2, 3 over a SS7 Signalling domain 6 to a receiving subscribers mobile device 4. The receiving mobile device 4 or its SIM generates a PoR in the form of a standards based USSD-command and transfers 4, 5, in a third step, the generated PoR over the SS/ Signalling domain to a USSD-GW 5. The trusted USSD-GW 5 transfers the PoR to 6a said SMS-C 1 or alternatively to 6b the said OTA-Platform.

In this way, for example, a successful OTA-provisioning of roaming parameters in a roaming situation can be confirmed, irrespectively of a long or short chain of trusted or non trusted SS7 SCCP carriers between the HPLMN and VPLMN.

Since the SIM or USIM or ME is generating a standards based USSD-command (MAP-USSD message being not accounted) as, for example, a result of successful or unsuccessful OTA provisioning the cost will be kept low, which solves the initially mentioned problem.

The present invention shall not be considered to be limited to the afore described embodiments, since variations can be made within the scope of the accompanying claims.

## Claims

1. A method for use in mobile telecommunication networks deploying Over-The-Air (OTA) provisioning of a SIM or an USIM or a Mobile Equipment (ME), in need to receive a trusted acknowledgement or Proof-of Receipt from the ME or SIM upon an OTA provisioning which is made over the existing signalling interfaces, where a short message (SM) is used as information bearer, for a message from an OTA platform or a users ME for provisioning of a SIM or USIM or a mobile equipment (ME) **characterised in, that** the SIM or USIM or ME is generating a standards based USSD-command (Unstructured supplementary Services Data) as a result of successful or unsuccessful OTA provisioning, **in that** the serving mobile network will be caused to route the MAP (Mobile Application Part)-USSD message over an existing, configured SS7 domain to the home network (HPLMN) and USSD Gateway entity which is caused to relay the acknowledgement to the OTA platform.

2. Method according to claim 1, **characterised in, that** the USSD-acknowledgement is caused to be sent back by the ME, upon successful reception, or upon selection and successful read of an ordinary message to the mobile subscriber or user.

3. Method according to claim 1, **characterised in, that** the sending conditions for sending or not sending said acknowledgement is pre-configured in the ME or SIM or USIM.

4. Method according to claim 1, **characterised in, that** the sending conditions for sending or not sending said acknowledgement is caused to come as a part of the actual message content on the OTA-protocol level, or as part message on the bearer message protocol level.

## Patentansprüche

1. Verfahren zur Verwendung in Telekommunikationsnetzwerken, welche eine Bereitstellung über eine Luftschnittstelle (OTA) für ein SIM oder ein USIM oder ein mobiles Endgerät (ME) nutzen, wobei es notwendig ist, eine gesicherte Bestätigung oder einen Nachweis des Zugangs von dem ME oder dem SIM bei einer OTA Bereitstellung zu erhalten, welche über die existierenden Übermittlungsschnittstellen erfolgt, wobei eine Kurznachricht (SM) als Informationsträger verwendet wird, für eine Nachricht von einer OTA-Plattform oder einem Nutzer-ME für eine Bereitstellung für eine SIM oder USIM oder ein mobiles Endgerät (ME), **dadurch gekennzeichnet, dass** das SIM oder USIM oder ME ein auf Normen basierendes USSD-Kommando (Unstructured supplementary Services Data) als Ergebnis einer erfolgreichen oder nicht erfolgreichen OTA Bereitstellung derart erzeugt, dass das aktive mobile Netzwerk veranlasst werden wird, die MAP (Mobile Applikation Part)-USSD Nachricht über eine existierende, konfigurierte SS7 Domain an das Heimnetzwerk (HPLMN) und die USSD-Gateway Instanz zu befördern, welche veranlasst wird, die Bestätigung an die OTA Plattform weiterzuleiten.

2. Verfahren nach Anspruch 1, **dadurch gekennzeichnet, dass** die USSD-Bestätigung veranlasst wird, durch das ME zurückgesendet zu werden, bei erfolgreichem Empfang, oder bei Auswahl und erfolgreichem Lesen einer gewöhnlichen Nachricht an den mobilen Teilnehmer oder Nutzer.

3. Verfahren nach Anspruch 1, **dadurch gekennzeichnet, dass** die Sendebedingung für ein Senden oder Nichtsenden der Bestätigung in dem ME oder SIM oder USIM vorkonfiguriert sind.

4. Verfahren nach Anspruch 1, **dadurch gekennzeichnet, dass** die Sendebedingung für ein Senden oder Nichtsenden der Bestätigung als ein Teil des eigentlichen Nachrichteninhalts auf der OTA-Protokollschicht oder als Teilnachricht auf der Trägernachrichtprotokollschicht ankommen.

## Revendications

1. Procédé destiné à une utilisation dans des réseaux de télécommunications mobiles déployant une fourniture sans fil (OTA) à un SIM, à un USIM ou à un matériel mobile (ME), ayant besoin de recevoir un accusé de réception sécurisé ou une preuve de réception émanant du ME ou SIM suite à une fourniture OTA réalisée via les interfaces de signalisation existantes, où un message court (SM) est utilisé comme support d'informations, pour un message émanant d'une plateforme OTA ou d'un ME d'utilisateur pour la fourniture à un SIM ou USIM ou à un matériel mobile (ME), **caractérisé en ce que** le SIM, USIM ou ME génère une instruction USSD (Unstructured Supplementary Services Data, données de services supplémentaires non structurées) sur une base standard comme résultat d'une fourniture OTA ayant réussi ou non, **en ce que** le réseau mobile de desserte sera amené à diriger le message MAP-USSD (Mobile Application Part) via un domaine existant de configuration SS7 vers le réseau domestique (HPLMN) et l'entité de passerelle USSD qui est amenée à relayer l'accusé de réception vers la plateforme OTA.

2. Procédé selon la revendication 1, **caractérisé en ce que** l'accusé de réception USSD est amené à être renvoyé par le ME, suite à une réception réussie, ou suite à une sélection et une lecture réussie d'un message ordinaire à l'abonné mobile ou utilisateur.

3. Procédé selon la revendication 1, **caractérisé en ce que** les conditions d'envoi pour envoyer ou ne pas envoyer ledit accusé de réception sont configurées au préalable dans le ME, SIM ou USIM.

4. Procédé selon la revendication 1, **caractérisé en ce que** les conditions d'envoi pour envoyer ou ne pas envoyer ledit accusé de réception sont amenées à arriver sous la forme d'une partie du contenu même de message sur le niveau de protocole OTA, ou sous la forme d'un message partiel sur le niveau de protocole de message de support.
